# FASCICULE DE BREVET EUROPEEN

(11) **EP 4 424 596 B1**
(45) Date de publication et mention de la délivrance du brevet: **11.11.2026**
(21) Numéro de dépôt: 24159514.9
(22) Date de dépôt: 23.02.2024
(51) Int. Cl.: B64D 11/02, B64C 1/14

(54) **DISPOSITIF DE VIDANGE D'UN RÉSERVOIR D'EAUX USÉES COMPRENANT UNE TRAPPE INTÉGRANT UNE RÉSERVE DE LIQUIDE, AÉRONEF COMPORTANT AU MOINS UN TEL DISPOSITIF DE VIDANGE**
VORRICHTUNG ZUM ENTLEEREN EINES ABWASSERTANKS MIT EINER KLAPPE MIT INTEGRIERTEM FLÜSSIGKEITSVORRAT, LUFTFAHRZEUG MIT MINDESTENS EINER SOLCHEN ENTLEERUNGSVORRICHTUNG
DEVICE FOR EMPTYING A WASTE WATER TANK COMPRISING A HATCH INTEGRATING A LIQUID SUPPLY, AIRCRAFT COMPRISING AT LEAST ONE SUCH DRAINING DEVICE

(30) Priorité: 28.02.2023 FR 2301809
(43) Date de publication de la demande: 04.09.2024
(73) Titulaire: Airbus Canada Limited Partnership, Mirabel, QC J7N 3C6 (CA)
(72) Inventeur: GOURGUES, Marion, Mirabel, Québec, J7N 3C6 (CA); ROY, Marc-André, Mirabel, Québec, J7N 3C6 (CA); RODRIGUEZ, Christophe, Mirabel, Québec, J7N 3C6 (CA)
(74) Mandataire: Gabriel, Franck

(56) Documents cités:
- EP-A1- 0 471 394
- GB-A- 2 526 089
- US-A- 5 535 784

## Description

La présente demande se rapporte à un dispositif de vidange d'un réservoir d'eaux usées comprenant une trappe intégrant une réserve de liquide ainsi qu'à un aéronef comportant au moins un tel dispositif de vidange.

Selon un mode de réalisation, un aéronef comprend au moins un réservoir prévu pour stocker les eaux usées, un système de mise au vide prévu pour générer une dépression dans le réservoir ainsi qu'un dispositif de vidange configuré pour vider le réservoir. Ce dispositif de vidange comprend un conduit de vidange qui présente une extrémité amont débouchant dans le réservoir et une extrémité aval, débouchant à l'extérieur du fuselage de l'aéronef, à laquelle peut être raccordé un conduit d'évacuation ainsi qu'une vanne de vidange positionnée entre les extrémités amont et aval du conduit de vidange et configurée pour occuper un état passant dans lequel la vanne de vidange permet un écoulement dans le conduit de vidange, de l'extrémité amont vers l'extrémité aval, et un état fermé dans lequel la vanne de vidange empêche tout écoulement dans le conduit de vidange.

En complément, le dispositif de vidange comprend un logement, en creux par rapport à la surface extérieure du fuselage de l'aéronef, ainsi qu'une trappe mobile entre une position ouverte dans laquelle la trappe dégage le logement et une position fermée dans laquelle la trappe ferme le logement et présente une face extérieure dans le prolongement de la surface extérieure du fuselage. Ce logement est dimensionné pour loger au moins l'extrémité aval du conduit de vidange ainsi qu'une commande configurée pour contrôler l'état de la vanne de vidange.

Au fil du temps, l'usure de la vanne de vidange peut engendrer une légère fuite des eaux usées. Pour empêcher tout écoulement en dehors du fuselage en dehors des périodes de vidange, le dispositif de vidange comprend un bouchon configuré pour coopérer avec l'extrémité aval du conduit de vidange et occuper une position fermée dans laquelle le bouchon obture l'extrémité aval du conduit de vidange et une position ouverte dans laquelle le bouchon dégage l'extrémité aval du conduit de vidange.

Dans certains cas, le volume du logement sous la trappe n'est pas suffisant pour loger le conduit de vidange équipé de son bouchon si bien qu'il est nécessaire de modifier la géométrie de la trappe afin que le bouchon n'interfère pas avec la trappe en position fermée. Cette modification engendre généralement une bosse, au niveau de la surface extérieure du fuselage, qui engendre des perturbations aérodynamiques.

Le document US5535784 décrit une soupape de vidange pour assurer l'étanchéité d'une conduite de vidange et la formation de glace due à cette fuite durant un vol à haute altitude.

Le document EP0471394 concerne un réservoir de rétention d'eau pour les toilettes d'un avion comportant une soupape à clapet pour laquelle la fuite de fluides au-delà de ladite soupape est corrigée afin d'empêcher toute fuite de fluide en cas de joint de soupape endommagé.

Le document GB2526089 décrit un réservoir de carburant d'aéronef comportant une ouverture de ravitaillement ayant une porte d'accès dotée d'un bouchon intégré à la porte d'accès afin que le bouchon recouvre l'ouverture en position fermée mais soit éloigné de l'ouverture pour permettre l'accès à l'ouverture lors du ravitaillement.

La présente invention vise à remédier à tout ou partie des inconvénients de l'art antérieur.

A cet effet, l'invention a pour objet un aéronef conforme à la revendication 1.

Selon l'invention, la trappe comprend une réserve de liquide située sur sa face intérieure, dans laquelle débouche le conduit de vidange lorsque la trappe est en position fermée, configurée pour collecter et stocker un éventuel liquide sortant du conduit de vidange.

Grâce à cette réserve de liquide solidaire de la trappe, il n'est plus nécessaire de prévoir un bouchon indépendant de la trappe pour éviter que le liquide provenant d'une éventuelle fuite de la vanne de vidange ne s'échappe en dehors de l'aéronef.

Selon une autre caractéristique, la réserve de liquide comprend au moins une paroi latérale qui s'étend le long d'un pourtour fermé, entre un bord inférieur relié à la face intérieure de la trappe et un bord supérieur distant de la face intérieure de la trappe.

Selon une autre caractéristique, la paroi latérale présente une hauteur, correspondant à une distance entre ses bords inférieur et supérieur, telle que l'extrémité aval du conduit de vidange soit située entre la face intérieure de la trappe et une surface contenant le bord supérieur de la paroi latérale.

Selon une autre caractéristique, le bord supérieur de la paroi latérale est positionné dans un plan sensiblement horizontal lorsque la trappe est en position fermée.

Selon un premier mode de réalisation, le pourtour fermé suivi par la paroi latérale est distant et indépendant du conduit de vidange.

Selon un deuxième mode de réalisation, le pourtour fermé suivi par la paroi latérale présente une section très légèrement supérieure à celle du conduit de vidange.

Selon une autre caractéristique, la réserve de liquide comprend un fond relié à la paroi latérale sur tout le pourtour fermé.

Selon une autre caractéristique, le fond est positionné dans un premier plan sensiblement parallèle à un deuxième plan contenant l'extrémité aval du conduit de vidange lorsque la trappe est en position fermée.

Selon une autre caractéristique, le fond est positionné de manière à être plaqué contre l'extrémité aval du conduit de vidange ou espacé d'une distance inférieure à 1 cm de cette extrémité aval lorsque la trappe est en position fermée.

Selon une autre caractéristique, le dispositif de vidange comprend un joint annulaire intercalé entre le conduit de vidange et la réserve de liquide lorsque la trappe est en position fermée.

D'autres caractéristiques et avantages ressortiront de la description de l'invention qui va suivre, description donnée à titre d'exemple uniquement, en regard des dessins annexés parmi lesquels :
[Fig. 1] est une vue en perspective d'une partie arrière d'un aéronef et en détail d'une zone du fuselage de l'aéronef comprenant un dispositif de vidange illustrant un mode de réalisation de l'invention,
[Fig. 2] est une coupe schématique longitudinale d'un dispositif de vidange illustrant un premier mode de réalisation de l'invention,
[Fig. 3] est une vue en perspective d'une trappe du dispositif de vidange visible sur la figure 2,
[Fig. 4] est une coupe schématique longitudinale d'un dispositif de vidange illustrant un deuxième mode de réalisation de l'invention,
[Fig. 5] est une vue en perspective d'une trappe du dispositif de vidange visible sur la figure 4, et
[Fig. 6] est une coupe longitudinale et en perspective d'une partie d'un aéronef équipé d'un dispositif de vidange illustrant le deuxième mode de réalisation de l'invention.

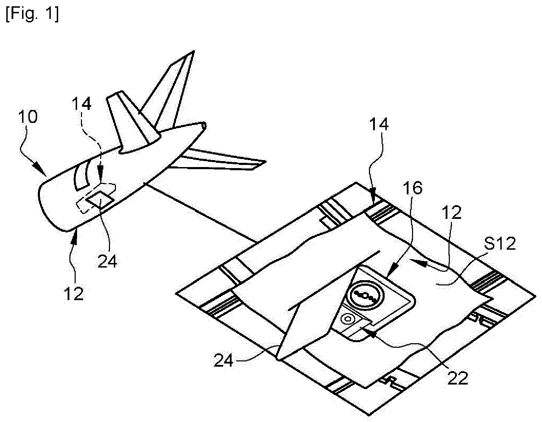

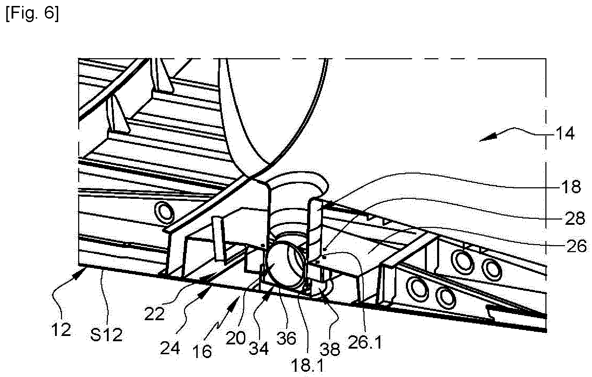

Selon un mode de réalisation visible sur les figures 1 et 6, un aéronef 10 comprend un fuselage 12, au moins un réservoir 14 configuré pour stocker des eaux usées ainsi qu'un dispositif de vidange 16 configuré pour faire communiquer le réservoir 14 avec une zone extérieure du fuselage 12.

Ce dispositif de vidange 16 comprend un conduit de vidange 18 qui présente une extrémité amont débouchant dans le réservoir 14 et une extrémité aval 18.1 accessible depuis l'extérieur du fuselage 12, à laquelle peut être raccordé un conduit d'évacuation, ainsi qu'une vanne de vidange 20 positionnée entre les extrémités amont et aval du conduit de vidange 18. Cette vanne de vidange 20 est configurée pour occuper un état ouvert dans lequel la vanne de vidange 20 permet un écoulement dans le conduit de vidange 18, de l'extrémité amont vers l'extrémité aval, et un état fermé dans lequel la vanne de vidange 20 empêche tout écoulement dans le conduit de vidange 18.

Selon un mode de réalisation, la vanne de vidange 20 présente un boisseau sphérique ainsi qu'une commande 20.1 actionnable par un opérateur pour commuter la vanne de vidange de l'état fermé à l'état ouvert ou inversement.

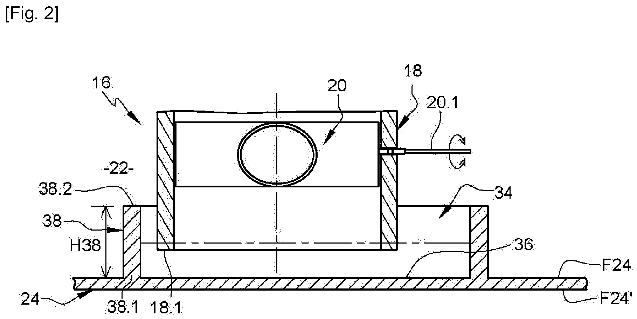

Le dispositif de vidange 16 comprend également au moins un logement 22, en creux par rapport à la surface extérieure S12 du fuselage 12, ainsi qu'une trappe 24 mobile entre une position ouverte (visible sur la figure 1) dans laquelle la trappe 24 dégage le logement 22 et une position fermée (visibles sur les figures 2, 4 et 6) dans laquelle la trappe 24 ferme le logement 22.

Comme illustré sur la figure 6, le logement 22 est délimité par une paroi 26 qui comprend un trou 26.1 pour permettre au conduit de vidange 18 de traverser la paroi 26. En complément, le dispositif de vidange 16 comprend une liaison 28 reliant de manière rigide la paroi 26 et le conduit de vidange 18. Selon un agencement, le conduit de vidange 18 comprend une collerette plaquée contre la paroi 26 et reliée à cette dernière par des éléments de liaison (des boulons ou des rivets pas exemple) répartis sur la circonférence du conduit de vidange 18.

La trappe 24 comprend une face intérieure F24 orientée vers le conduit de vidange 18 lorsque la trappe 24 est en position fermée ainsi qu'une face extérieure F24' opposée à la face intérieure F24 et positionnée dans le prolongement de la surface extérieure S12 du fuselage 12 lorsque la trappe 24 est en position fermée.

L'aéronef comprend au moins une articulation 30 pour relier la trappe 24 au fuselage 12 et/ou à la paroi 26 du logement 22 ainsi qu'un système de verrouillage/déverrouillage 32 pour maintenir la trappe 24 en position fermée.

Le logement 22 est dimensionné pour loger au moins l'extrémité aval 18.1 du conduit de vidange 18 ainsi que la commande 20.1 de la vanne de vidange 20. Ainsi, lorsque la trappe 24 est en position fermée, l'extrémité aval 18.1 du conduit de vidange 18 est espacée de la face intérieure F24 de la trappe 24 d'une distance comprise entre 0,5 cm et 10 cm.

Tous ces éléments ne sont pas plus décrits car ils peuvent être identiques à ceux de l'art antérieur. Contrairement à l'art antérieur, le dispositif de vidange 16 peut ne pas comprendre de bouchon.

Selon une particularité de l'invention, la trappe 24 comprend une réserve de liquide 34 située sur sa face intérieure F24, dans laquelle débouche le conduit de vidange 18 lorsque la trappe 24 est en position fermée, configurée pour collecter et stocker un éventuel liquide sortant du conduit de vidange 18 en cas d'une éventuelle fuite. Grâce à cette réserve de liquide 34 prévue sur la face intérieure F24 de la trappe 24, il n'est plus nécessaire de prévoir un bouchon. Par conséquent, la trappe 24 n'a pas besoin d'être modifiée pour loger ledit bouchon.

Cette réserve de liquide 34 comprend au moins une paroi latérale 38 qui s'étend le long d'un pourtour fermé. Cette paroi latérale 38 s'étend entre un bord inférieur 38.1 relié à la face intérieure F24 de la trappe 24 et un bord supérieur 38.2 distant de la face intérieure F24 de la trappe 24. Cette paroi 38 est sensiblement verticale lorsque la trappe 24 est en position fermée.

Selon une configuration, la paroi latérale présente une hauteur H38 (distance entre les bords inférieur et supérieur 38.1, 38.2) telle que l'extrémité aval 18.1 du conduit de vidange 18 soit située entre la face intérieure F24 de la trappe 24 et une surface contenant le bord supérieur 38.2. Lorsque la trappe 24 est en position fermée, la hauteur H38 de la paroi latérale 38 de la réserve de liquide 34 est supérieure ou égale à la distance séparant l'extrémité aval 18.1 du conduit de vidange 18 et la face intérieure F24 de la trappe 24.

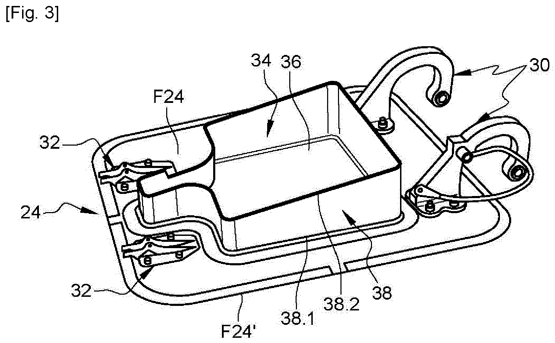

Comme illustré sur la figure 3, la paroi latérale 38 n'a pas nécessairement une hauteur constante sur tout le pourtour fermé. Selon un mode de réalisation, la hauteur H38 de la paroi latérale 38 est déterminée de manière à ce que le bord supérieur 38.2 soit positionné dans un plan sensiblement horizontal lorsque la trappe 24 est en position fermée.

Selon un mode de réalisation, la réserve de liquide 34 comprend un fond 36 relié à la paroi latérale 38 sur tout le pourtour fermé.

Selon une configuration visible sur les figures 2 et 3, le fond 36 de la réserve de liquide 34 correspond à la face intérieure F24 de la trappe 24.

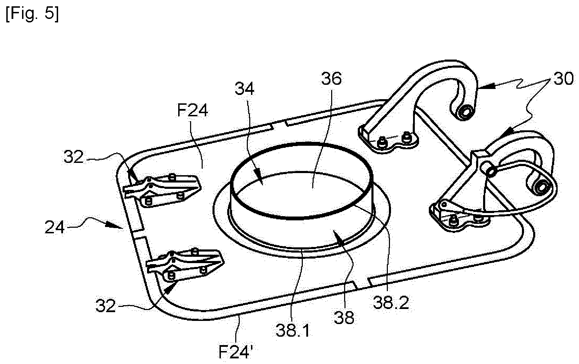

Selon une autre configuration visible sur les figures 5 et 6, le fond 36 est un élément distinct de la trappe 24. Selon cette configuration, le fond 36 est positionné dans un premier plan sensiblement parallèle à un deuxième plan contenant l'extrémité aval 18.1 du conduit de vidange 18 lorsque la trappe 24 est en position fermée. Le fond 36 est positionné de manière à être plaqué contre l'extrémité aval 18.1 du conduit de vidange 18 ou faiblement espacé (d'une distance inférieure à 1 cm) de cette extrémité aval 18.1 lorsque la trappe 24 est en position fermée.

Selon un premier mode de réalisation visible sur les figures 2 et 3, la paroi latérale 38 suit un pourtour fermé, distant et indépendant du conduit de vidange 18. Selon ce premier mode de réalisation, le pourtour fermé suivi par la paroi latérale 38 est déterminé de manière à ce que le volume de la réserve de liquide 34 soit le plus important possible. Ainsi, il est possible d'espacer dans le temps les visites nécessaires pour vider la réserve de liquide 34.

Selon ce premier mode de réalisation, la réserve de liquide 34 n'est pas fermée par le conduit de vidange 18 même lorsque la trappe 24 est en position fermée.

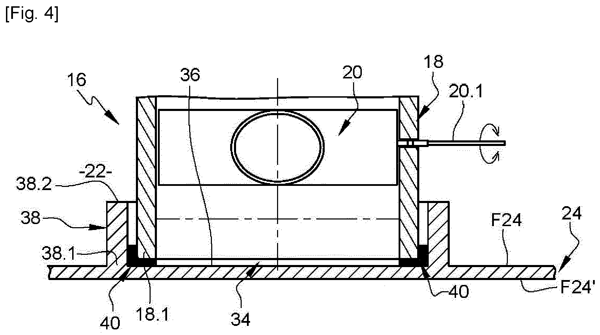

Selon un deuxième mode de réalisation visible sur les figures 4 à 6, la paroi latérale 38 suit un pourtour fermé qui présente une section très légèrement supérieure à celle du conduit de vidange 18. Ainsi, lorsque la trappe 24 est en position fermée, la paroi latérale 38 est faiblement espacée du conduit de vidange 18 sur toute sa circonférence. Par faiblement espacée, on entend que la distance séparant la paroi latérale 38 et le conduit de vidange 18 est inférieure à 1 cm sur toute la circonférence.

Selon une configuration, le conduit de vidange 18 présente une section circulaire. En complément, la paroi latérale 38 suit un pourtour fermé circulaire, coaxial au conduit de vidange 18 lorsque la trappe 24 est en position fermée, présentant un diamètre légèrement supérieur au diamètre extérieur du conduit de vidange 18.

Selon le deuxième mode de réalisation, le dispositif de vidange 16 comprend un joint annulaire 40 intercalé entre le conduit de vidange 18 et la réserve de liquide 34 lorsque la trappe 24 est en position fermée, plus particulièrement entre l'extrémité aval 18.1 du conduit de vidange 18 et le fond 36 et/ou la paroi latérale 38 de la réserve de liquide 34.

Selon une configuration, le joint annulaire 40 est un joint en caoutchouc naturel ou synthétique. Ce joint annulaire 40 peut être solidaire de la réserve de liquide 34 lorsque la trappe 24 est en position ouverte.

Selon le deuxième mode de réalisation, la réserve de liquide 34 est fermée lorsque la trappe 24 est en position fermée, contrairement au premier mode de réalisation. Selon ce mode de réalisation, le fond 36 et la paroi latérale 38 de la réserve de liquide 34 forment un bouchon solidaire de la trappe 24.

## Revendications

1. [Aéronef comportant un fuselage (12), au moins un réservoir (14) pour stocker des eaux usées ainsi qu'un dispositif de vidange (16) pour le réservoir (14) comprenant un conduit de vidange (18) qui présente une extrémité amont configurée pour déboucher dans le réservoir (14) et une extrémité aval (18.1) à laquelle peut être raccordé un conduit d'évacuation, une vanne de vidange (20) positionnée entre les extrémités amont et aval du conduit de vidange (18), un logement (22) dimensionné pour loger au moins l'extrémité aval (18.1) du conduit de vidange (18) ainsi qu'une trappe (24) mobile entre une position ouverte dans laquelle la trappe (24) dégage le logement (22) et une position fermée dans laquelle la trappe (24) ferme le logement (22), la trappe (24) comportant une face intérieure (F24) orientée vers le conduit de vidange (18) lorsque la trappe (24) est en position fermée ainsi qu'une face extérieure (F24') opposée à la face intérieure (F24) ; **caractérisé en ce que** la face extérieure (F24') de la trappe (24) est positionnée dans le prolongement de la surface extérieure (S12) du fuselage (12) lorsque la trappe (24) est en position fermée ; et **en ce que** la trappe (24) comprend une réserve de liquide (34) située sur sa face intérieure (F24), dans laquelle débouche le conduit de vidange (18) lorsque la trappe (24) est en position fermée, configurée pour collecter et stocker un éventuel liquide sortant du conduit de vidange (18).

2. Aéronef selon la revendication 1, **caractérisé en ce que** la réserve de liquide (34) comprend au moins une paroi latérale (38) qui s'étend le long d'un pourtour fermé, entre un bord inférieur (38.1) relié à la face intérieure (F24) de la trappe (24) et un bord supérieur (38.2) distant de la face intérieure (F24) de la trappe (24).

3. Aéronef selon la revendication précédente, **caractérisé en ce que** la paroi latérale (38) présente une hauteur (H38), correspondant à une distance entre ses bords inférieur et supérieur (38.1, 38.2), telle que l'extrémité aval (18.1) du conduit de vidange (18) soit située entre la face intérieure (F24) de la trappe (24) et une surface contenant le bord supérieur (38.2) de la paroi latérale (38).

4. Aéronef selon l'une des revendications 2 à 3, **caractérisé en ce que** le bord supérieur (38.2) de la paroi latérale (38) est positionné dans un plan sensiblement horizontal lorsque la trappe (24) est en position fermée.

5. Aéronef selon l'une des revendications 2 à 4, **caractérisé en ce que** le pourtour fermé suivi par la paroi latérale (38) est distant et indépendant du conduit de vidange (18).

6. Aéronef selon l'une des revendications 2 à 4, **caractérisé en ce que** le pourtour fermé suivi par la paroi latérale (38) présente une section très légèrement supérieure à celle du conduit de vidange (18).

7. Aéronef selon l'une des revendications 2 à 6, **caractérisé en ce que** la réserve de liquide (34) comprend un fond (36) relié à la paroi latérale (38) sur tout le pourtour fermé.

8. Aéronef selon la revendication précédente, **caractérisé en ce que** le fond (36) est positionné dans un premier plan sensiblement parallèle à un deuxième plan contenant l'extrémité aval (18.1) du conduit de vidange (18) lorsque la trappe (24) est en position fermée.

9. Aéronef selon la revendication précédente, **caractérisé en ce que** le fond (36) est positionné de manière à être plaqué contre l'extrémité aval (18.1) du conduit de vidange (18) ou espacé d'une distance inférieure à 1 cm de cette extrémité aval (18.1) lorsque la trappe (24) est en position fermée.

10. Aéronef selon l'une des revendications précédentes, **caractérisé en ce que** le dispositif de vidange (16) comprend un joint annulaire (40) intercalé entre le conduit de vidange (18) et la réserve de liquide (34) lorsque la trappe (24) est en position fermée.

## Patentansprüche

1. Luftfahrzeug, einschließlich eines Rumpfs (12), mindestens eines Tanks (14) zur Speicherung von Abwasser sowie einer Entleerungsvorrichtung (16) für den Tank (14), die ein Entleerungsrohr (18) umfasst, das ein vorgelagertes Ende aufweist, das so konfiguriert ist, dass es in den Tank (14) mündet, und ein nachgelagertes Ende (18.1), an das ein Ablaufrohr angeschlossen werden kann, eines Entleerungsventils (20), das zwischen den vor- und nachgelagerten Enden des Entleerungsrohrs (18) positioniert ist, eines Gehäuses (22), das so dimensioniert ist, dass es mindestens das nachgeschaltete Ende (18.1) der Entleerungsleitung (18) sowie eine Klappe (24) aufnimmt, die zwischen einer offenen Position, in der die Klappe (24) das Gehäuse (22) freigibt, und einer geschlossenen Position, in der die Klappe (24) das Gehäuse (22) schließt, beweglich ist, wobei die Klappe (24) eine in Richtung der Entleerungsleitung (18) gerichtete Innenseite (F24) aufweist, wenn die Klappe (24) in geschlossener Position ist, sowie eine der Innenseite (F24) gegenüberliegende Außenseite (F24'); **dadurch gekennzeichnet, dass** die Außenseite (F24') der Klappe (24) in Verlängerung der Außenfläche (S12) des Rumpfes (12) positioniert ist, wenn sich die Klappe (24) in geschlossener Position befindet; und dass die Klappe (24) einen Flüssigkeitssammelraum (34) auf ihrer Innenseite (F24) umfasst, in den die Entleerungsleitung (18) mündet, wenn sich die Klappe (24) in geschlossener Position befindet, und der so eingerichtet ist, dass er eine eventuell aus der Entleerungsleitung (18) austretende Flüssigkeit aufnimmt und speichert.

2. Luftfahrzeug nach Anspruch 1, **dadurch gekennzeichnet, dass** der Flüssigkeitssammelraum (34) mindestens eine Seitenwand (38) umfasst, die sich entlang eines geschlossenen Umfangs zwischen einer mit der Innenseite (F24) der Klappe (24) verbundenen unteren Kante (38.1) und einer von der Innenseite (F24) der Klappe (24) entfernten oberen Kante (38.2) erstreckt.

3. Luftfahrzeug nach dem vorhergehenden Anspruch, **dadurch gekennzeichnet, dass** die Seitenwand (38) eine Höhe (H38) aufweist, die einem Abstand zwischen ihren unteren und oberen Kanten (38.1, 38.2) entspricht, so dass sich das nachgeschaltete Ende (18.1) der Entleerungsleitung (18) zwischen der Innenseite (F24) der Klappe (24) und einer die die obere Kante (38.2) der Seitenwand (38) enthaltenden Oberfläche befindet.

4. Luftfahrzeug nach einem der Ansprüche 2 bis 3, **dadurch gekennzeichnet, dass** die obere Kante (38.2) der Seitenwand (38) in einer im Wesentlichen horizontalen Ebene positioniert ist, wenn sich die Klappe (24) in geschlossener Position befindet.

5. Luftfahrzeug nach einem der Ansprüche 2 bis 4, **dadurch gekennzeichnet, dass** der von der Seitenwand (38) gefolgte geschlossene Umfang von der Entleerungsleitung (18) entfernt und unabhängig ist.

6. Luftfahrzeug nach einem der Ansprüche 2 bis 4, **dadurch gekennzeichnet, dass** der von der Seitenwand (38) gefolgte geschlossene Umfang einen geringfügig größeren Querschnitt aufweist als der der Entleerungsleitung (18).

7. Luftfahrzeug nach einem der Ansprüche 2 bis 6, **dadurch gekennzeichnet, dass** der Flüssigkeitssammelraum (34) einen Boden (36) umfasst, der über den gesamten geschlossenen Umfang mit der Seitenwand (38) verbunden ist.

8. Luftfahrzeug nach dem vorhergehenden Anspruch, **dadurch gekennzeichnet, dass** der Boden (36) in einer ersten Ebene im Wesentlichen parallel zu einer zweiten Ebene positioniert ist, die das nachgeschaltete Ende (18.1) der Entleerungsleitung (18) enthält, wenn sich die Klappe (24) in der geschlossenen Position befindet.

9. Luftfahrzeug nach dem vorhergehenden Anspruch, **dadurch gekennzeichnet, dass** der Boden (36) so positioniert ist, dass er gegen das nachgeschaltete Ende (18.1) der Entleerungsleitung (18) gedrückt wird oder einen Abstand von weniger als 1 cm zu diesem nachgeschalteten Ende (18.1) hat, wenn sich die Klappe (24) in geschlossener Position befindet.

10. Luftfahrzeug nach einem der vorhergehenden Ansprüche, **dadurch gekennzeichnet, dass** die Entleerungsvorrichtung (16) eine Ringdichtung (40) umfasst, die zwischen der Entleerungsleitung (18) und dem Flüssigkeitssammelraum (34) eingelegt ist, wenn sich die Klappe (24) in geschlossener Position befindet.

## Claims

1. An aircraft comprising a fuselage (12), at least one tank (14) for storing waste water, and a drainage device (16) for the tank (14) comprising a drain conduit (18) having an upstream end configured to open into the tank (14) and a downstream end (18.1) to which a discharge conduit can be connected, a drain valve (20) positioned between the upstream and downstream ends of the drain conduit (18), a housing (22) dimensioned to accommodate at least the downstream end (18.1) of the drain conduit (18), and a hatch (24) movable between an open position in which the hatch (24) clears the housing (22) and a closed position in which the hatch (24) closes the housing (22), the hatch (24) comprising an inner face (F24) facing toward the drain conduit (18) when the hatch (24) is in the closed position and an outer face (F24') opposite to the inner face (F24);
**characterized in that** the outer face (F24') of the hatch (24) is positioned in continuation of the outer surface (S12) of the fuselage (12) when the hatch (24) is in the closed position;
and **in that** the hatch (24) comprises a liquid reservoir (34) located on its inner face (F24), into which the drain conduit (18) opens when the hatch (24) is in the closed position, configured to collect and store any liquid exiting the drain conduit (18).

2. The aircraft according to claim 1, **characterized in that** the liquid reservoir (34) comprises at least one side wall (38) extending along a closed perimeter, between a lower edge (38.1) connected to the inner face (F24) of the hatch (24) and an upper edge (38.2) spaced from the inner face (F24) of the hatch (24).

3. The aircraft according to the preceding claim, **characterized in that** the side wall (38) has a height (H38), corresponding to a distance between its lower and upper edges (38.1, 38.2), such that the downstream end (18.1) of the drain conduit (18) is located between the inner face (F24) of the hatch (24) and a surface containing the upper edge (38.2) of the side wall (38).

4. The aircraft according to any one of claims 2 to 3, **characterized in that** the upper edge (38.2) of the side wall (38) is positioned in a substantially horizontal plane when the hatch (24) is in the closed position.

5. The aircraft according to any one of claims 2 to 4, **characterized in that** the closed perimeter followed by the side wall (38) is spaced from and independent of the drain conduit (18).

6. The aircraft according to any one of claims 2 to 4, **characterized in that** the closed perimeter followed by the side wall (38) has a cross-section very slightly larger than that of the drain conduit (18).

7. The aircraft according to any one of claims 2 to 6, **characterized in that** the liquid reservoir (34) comprises a bottom (36) connected to the side wall (38) along the entire closed perimeter.

8. The aircraft according to the preceding claim, **characterized in that** the bottom (36) is positioned in a first plane substantially parallel to a second plane containing the downstream end (18.1) of the drain conduit (18) when the hatch (24) is in the closed position.

9. The aircraft according to the preceding claim, **characterized in that** the bottom (36) is positioned so as to be pressed against the downstream end (18.1) of the drain conduit (18) or spaced by a distance of less than 1 cm from said downstream end (18.1) when the hatch (24) is in the closed position.

10. The aircraft according to any one of the preceding claims, **characterized in that** the drainage device (16) comprises an annular seal (40) interposed between the drain conduit (18) and the liquid reservoir (34) when the hatch (24) is in the closed position.
